# EUROPEAN PATENT APPLICATION

(11) **EP 1 358 807 A2**
(43) Date of publication of application: **05.11.2003**
(21) Application number: 03388029.5
(22) Date of filing: 05.05.2003
(51) Int. Cl.: A23L 1/22, A23L 1/105, A23L 1/186, A23L 1/314, A21D 2/36, C12F 3/00, A21D 13/02

(54) **Use of stillage from alcohol production as functional ingredients in food**

(30) Priority: 03.05.2002 DK 200200673
(71) Applicant: Agro-korn a/s, 6920 Videbaek (DK)
(72) Inventor: Aarup, Anton, DK-6920 Videbaek (DK); Thaysen, Dorrit, DK-6920 Videbaek (DK)
(74) Representative: Rotne, Jens Styrup

(57) **Abstract**

The use of stillage from alcohol production as a functional ingredient is described. The stillage may be used in food products such as bread products, breakfast cereals, snacks, meat products, sauces and brines where the characteristic flavour of the stillage contributes to the desired taste of the products.

Further methods for stabilisation of the stillage from alcohol production are provided where said products are heat treated for a short period in order to remove microorganisms without excessive loss of volatile compounds that contributes to the desired flavour.

## Description

The invention relates to the use of stillage from alcohol production as functional ingredients in food products such as baked goods, chips and breakfast cereals, sausages, hamburgers, spicy sauces, brines etc.

In particular the invention relates to the use of stillage as ingredients giving a distinct flavour in foods.

Further the invention relates to a process for pre-treatment of said stillage in order to retain the desired flavouring properties.

### Background for the invention

Production of ethanol from agricultural products using yeast is one of the most important and best-known industrial fermentations. Corn, wheat, barley, molasses and other starch containing crops are the most popular substrates to use.

Several processes typically involve an enzymatic conversion of starch to sugar, followed by fermentation and distillation to recover alcohol and carbon dioxide. Manufacturers typically dry the grain residue and sell the dried product commonly called "distillers dried grain" but the grain residue is also sold wet. The distillers dried and wet grains are sold as an animal feed or as a component in other animal feed products.

Utilization of fermentation residues has received little attention beyond the use in animal feeds. Tsen et al., in "Evaluation of the quality of cookies supplemented with distillers dried grain flours" (Journal of food science, 1982, vol 47, 684-685) test the functionality and taste when mixing distillers dried grain flour with wheat flour at a 15% replacement level for making sugar cookies. Doerry, W.T., in "Evaluation of potential food applications of dried distillers spent grain" (American Institute of Baking, 0206-1981) report the compositional and nutritional aspect, rheological properties and baking performances of distillers dried grain. Doerry, W.T. reports that the nutritional values vary according to how the samples have been processed. Furthermore, the dried grains seem to behave like many non-wheat type materials, e.g. fibre, when investigating for rheological effects on bakers flour. The spent grain were use to replace 15% of the flour from a bread formula with the result that water absorption increased by 9%, but the dough was sticky and weak, and in general the breads had a strong sour flavour, which presents obstacles to its use in bread making.

Dong F.M. & Rasco, B.A. have in several articles described that a partial substitution of dried spent grain for all-purpose flour has nutritional advantageous for people by increasing their dietary fibre intake ("The neutral detergent fibre, acid detergent fibre, crude fibre, and lignin contents of distillers' dried grains with solubles" Journal of Food Science, 1987, vol 52 (2), 403-405 & "Chemical composition of distillers dried grains with solubles from soft white wheat, hard red wheat and corn" Journal of Food Science, 1987, vol 52 (1), 236-237).

Many attempts have been made throughout the years to find acceptable human food grade applications for distillers spent grain and brewers spent grain. For a thorough discussion of these attempts for use see U.S. Pat. No. 4,828,846 to Rasco et al.(1989), in which it is found that the so called unpleasant taste and odour of the distillers dried grain may be masked or reduced by a careful adjustment of pH by suitable acids and bases during starch conversion and before drying.

DE 39 10 577 A1 discloses a process for pre-treatement of stillage be a particular three step process. The treated stillage may be added to bread.

US 5,316,782 disclose a process consisting of addition of a base to the liquid fraction of stillage, heating the mixture in several hours followed by drying for the manufacture of a flavouring composition. The flavour of the composition depends on the particular base added to the stillage.

Patents for novel foods made by recovering human food value from the residues remaining after starch containing cereals and the like have been converted to sugar during the production of ethanol are filed by Thacker, R.S. & Dodgin, A., see U.S. Pat. No.5,106,634 and U.S. Pat. No. 5,061,497.

Inventions related to a method for producing foodstuffs, dietetic foodstuffs and food additives based on grain stillage have been filed by Marc, T., see WO011245, DE3900484, DE3904962. Marc, T. describes preparations based on yeast and spent cereal mash including gelling agents which completely neutralise the typical taste and aroma. However, it is also possible to add the gelling agent and/or milk protein, in particular lactic milk protein, even after conventional processes have been employed and to carry out further processing to give outstanding products. Another one of the developed products is based on grain stillage taken from the burner kettle, which is thickened but not dried and is fermented with milk and a yoghurt culture or a dairy culture.

### Description of the invention

The present invention is based on the recognition that stillage from alcohol production may be used in food products as functional ingredients.

The term "functional ingredients" is intended to indicate that the particular ingredients exert a particular effect on the properties of the food product to which it is added. This particular effect may be flavouring, souring or preserving of the final product, or it may be a rheological effect on the mixture during manufacture thereof, such as dough improvements of dough for bread.

As stillage from alcohol production is according to the invention understood distillers grains, distillers spent grains and stillage. The stillage may be derived from cereals or other sugar containing raw material deriving from non cereal sources, e.g. molasses from sugar beets or sugar cane depending on the particular alcohol fermentation. Further the person skilled in the art will appreciate that stillage will contain yeast.

In the present application distillers' grains, distillers spent grains and stillage are considered stillage independently of the actual used raw materials and the presence of yeast.

In alcohol production starting from grains these are saccharifed enzymatically and subsequently fermented using yeast. After the fermentation the produced alcohol is removed by distillation whereas the product left after the distillation is the stillage. In case of alcohol production where molasses are used as substrate for the fermentation instead of or as a supplement to the saccharified grains the product left after distillation is stillage.

The term " saccharified enzymatically" is intended to mean that polysaccharides, mainly starch, are decomposed into lower sugers by enzymes independently if the enzymes originate from the grain itself, from malt or is added from an extrageneous source.

After a sugar containing broth is provided this broth is fermented using particular strains of yeast. During the fermentation when the alcohol is produced a number of other compounds are also formed such as small organic molecules e.g. organic acids.

Without wishing to be bound by any theory it is assumed that small organic molecules in the fermentation broth is concentrated during distillation of alcohol giving the stillage its particular properties that allow it to exert is particular function as functional ingredients, e.g. as flavouring.

It is an important aspect of the invention that the stillage provided from the alcohol production is used essentially as it leaves the distillation plant without any pre-treatment that may alter the chemical composition of the stillage, except removal or addition of water, such as an concentration of the stillage. In the present application the term "untreated stillage" is intended to mean a stillage where the chemical composition has not been substantially altered after removal from distillation plant, except for concentration or dilution with water.

Stillage is according to the invention used wet. In some connections the term "distillers grains" is understood as a dried product whereas the term "stillage" is understood as a wet product. In the present description this distinction is not used but it should be understood that stillage preferably is used wet even though it may be possible to provide the products in a dry form.

Stillage may be provided as a concentrated product prepared by removal of water according to procedures known within the art for concentration of fluid aqueous products, such as evaporation, membrane processes etc. However during concentration of stillage care should be taken not to remove other compounds than water such as volatile organic compounds, as this may alter the beneficial properties of stillage.

By using wet products there is obviously no need for any costly drying operations. Further, the present inventors have surprisingly realized that volatile flavour components present in the wet product may be partly or completely lost during drying, which lead to a product less suited for use according to the invention e.g. as a flavouring ingredient.

The person skilled in the art will appreciate that various physical pre treatments may be performed before use in order to obtain the stillage in a suitable form for the intended use, or solids present in stillage may be removed by known procedures. These pre treatments include grinding, milling, disintegration, homogenisation, extrusion, centrifugation, filtration, decantation etc. It is expected that such physical treatement does not substantially change the chemical composition of the stillage. Thus stillage treated with such a physical pre treatment is considered as untreated stillage, even though the appearance of the product obviously will be changed.

Stillage may for example be used in bread products, breakfast cereal products, snack products, sauces, soups, brines and meat products.

A preferred use of distillers grains and stillage is in food products of the type of fermented food products, such as bread products, meat products and vegetables or fruit products. The food products may be fermented in the usual way or may not be fermented. In this type of products the distillers grains may be used to enhance the taste arising from the fermentation of the product or even may even be used instead of a fermentation. Even though the food products are not fermented the added distillers grains or stillage will provide the characteristic taste usually arising from the fermentation.

For example stillage may be used is rye bread of the Danish type.

A preferred use of stillage is in meat products of the type of fermented meats such as sausages of the salami type. Preferably the stillage is disintegrated and/or homogenized or the solids removed before use.

Using stillage in product that traditionally are fermented with e.g. lactobacteria, may be produced with a shorter fermentation period in order to obtain the desired taste and texture of the product. In this way the use of stillage increases the throughout of the plant and reduce the need for fermentation capacity.

Without wishing to be bound by any theory it is believed that the organic acids produced during the alcohol fermentation and contained in the stillage mimics the effect of the fermentation with bacteria, such as lactic acid bacteria, by providing the organic acids normally provided by the fermentation of the food product.

Another preferred use of stillage according to the invention is in bread, in particular wheat bread. It has surprisingly been observed that addition of stillage to dough has a beneficial effect on the rheological properties of the dough. Thus addition of stillage to dough improves the handling of the dough by tightening up the dough, making the dough more extensible and stabilizing the dough through kneading.

Stillage is usually added in an amount of 1-20%, preferably 2-15%.

As the stillage is used wet the product may be stabilized in order to improve the shelf life of the stillage, in particular if the product is not used immediately after production. The stabilization may be performed by a gentle heat treatment immediately after production in order to prevent undesired enzymatic or microbial activity in the product, which may spoil or deteriorate the product. Other known measures for stabilisation, include addition of salt or a known preservation agent, may also be used.

The stillage from alcohol production may be stabilized after their production by a short heat treatment. It is preferred that the heat treatment is short in order to avoid deteriorating the flavour of the product. If the stillage is overheated the flavour of resulting product may be deteriorated in such a degree that the product no longer is suited for use as functional ingredients according to the invention.

By a short heat-treatment it is intended to mean a treatment in the range of 10 seconds to 10 minutes, preferably in the range of 15 seconds to 5 minutes, and most preferred in the range of 20 seconds to 3 minutes.

The temperature of the heat treatment can be selected in the range of 70-145°C. If the temperature is selected in the high end of said range the heat treatment is usually performed for a short period. Similar if the temperature is low a longer treatment can be used.

It is within the skills of the qualified practitioner to select proper temperatures to obtain a stabilized product where microorganisms in the stillage are substantially killed or inactivated.

For example the stillage from alcohol production may be pasteurised at a temperature of 72-85°C in 15 seconds to 2 minutes, preferably 1 minute or less.

Alternatively the stillage from alcohol production may be treated by an UHT treatment at a temperature of 130-145°C in 15 seconds to 5 minutes, preferably in the range of 30 seconds to 2 minutes.

Alternatively the stillage from alcohol production may be dispensed into suitable containers and autoclaved according to known procedures e.g. at 121°C approximately 20 minutes. After such an autoclaving the product can be stored for long periods of time before use.

It is believed that such an autoclaving can be performed without damaging the products because the product during the autoclaving is contained in a closed container, which prevents the volatile compounds in escaping.

After autoclaving cooled to 50°C or below, preferably to room temperature or ambient temperature.

As an alternative to a stabilization process, the stillage may be removed from the distillation column immediately after the distillation and filled directly into containers, which are closed immediately after filling. If the filling is performed under septically precautions the stillage may be kept in the closed containers until use without further treatment.

The invention is now described in further details by the following examples, which are provided solely for illustration of the invention and should not in any way be regarded as limiting.

### Examples

### Example 1. Pretreatment of stillage

Following removal from the distillation column, wet distillers grain (stillage) was cooled to below 10°C. Next stillage heated in a heat exchanger to a temperature of 100°C for at least 5 min., and subsequently again cooled to below 10°C. This cooled distillers grain may be used in wheat- and rye bread by exchanging 5-10% of the intended water volume with grain residue.

### Example 2. Stillage in wheat bread

2000 g wheat flour, 40 g salt, 20 g sugar, 75 g yeast, 1100 g water were mixed with 80 g wet stillage. The dough was mixed and rested for 15 min, where after the bread of 500 g were made and put into forms and rested for 10 min. at room temperature, where after the breads were placed for 45 min at 37°C.

The breads were baked at 240°C until the crusts were light brown.

The breads are having a good taste and a round, and deep characteristic flavour. The colour of the crumb is darker and more greyish than reference.

The baked breads have an increased volume of 4-8% compared to reference wheat bread without stillage.

### Example 3. Stillage in rye bread

1800 g rye flour, 200 g wheat flour 50 g salt, 90 g yeast, 24 g dry sour dough, 750 g water were mixed with 600 g wet stillage. The dough was mixed and rested for 15 min, where after 900 g of dough were put into forms, and placed at 37°C for 45 min. The breads were baked at 260 - 200°C until optimal centre temp.

The bread had a good taste and a round and deep characteristic flavour. The colour of the crumb is lighter than a reference rye bread without stillage.

### Example 4. Stillage in sausages

A salami was made with the following recipe: 3000 g pork, 4000 g beef, 3000 g fat, 200 g nitrite, 200 g salt and 40 g spices were mixed with 300 g wet stillage. The sausages were formed and rested 24 hours at 24°C at high humidity. The sausages were smoked 12 hours at 20°C using beech wood as the smoke giving fuel. Thereafter the sausages were placed in a cool place for 2 weeks.

Similar a salami was made by replacing the 300 g wet stillage with a mixture of 100 g brewers spent grain and 500 g wet stillage.

Both salamis had a very good and hard consistence.

The taste of the salamis was milder, more complex and the taste lasted for longer compared to reference. Salamis based on both brewers spent grain and stillage had a less sourish taste than salami based only on stillage.

The weight loss of the sausages by using stillage and brewers spent grain was reduced compared with similar sausages without stillage and brewers spent grain.

### Example 5. Stillage in sauces

Stillage can be used as savoury and as a flavouring and odour substance in sauces.

Stillage (wet) was added either directly to premade soya/miso sauce or added prior to the fermentation thereof. The insoluble parts of stillage may be added either have been separated by centrifugation/press where after it is added. Alternatively the wet stillage can have been homogenized prior use in sauces. Adding stillage or a fraction of stillage will decrease the processing time when producing catsup and soya/miso sauce or spicy sauces and increasing the aromatic flavour of the finished sauce/paste.

## Claims

1. Use of untreated stillage from alcohol production as functional ingredients in food products.

2. Use according to claim 1, wherein the stillage is based on barley, wheat, corn, maize, rice or sorghum.

3. Use according to claim 1 or 2, wherein the stillage is stabilized after removal from the production plant.

4. Use according to claim 3, wherein the stabilization is performed by a heat treatment, addition of salt, by a cooling step, drying or another preserving agent, or by filling directly from the production plant into a container under septically conditions.

5. Use according to any of claims 1-4, wherein the stillage before the use are treated with one or more treatments selected among: milling, grinding, disintegration, homogenisation, extrusion, removal of solids or fractionation of solids.

6. Use according to any of claim 1-5, wherein the stillage is used without drying.

7. Use according to any of the claims 1-6, wherein solids have been removed from the sillage before use by centrifugation or decantation.

8. Use according to claim 7, wherein the level of solids in the stillage after centrifugation or decantation is in the range of 15-35 % b.w.

9. Use according to any of the claims 1-8 wherein the food product is bread.

10. Use according to any of the claims 1-8, wherein the food product is selected among breakfast cereals, snacks, meat products, soups, sauces and brines, the type of fermented foods or salami.

11. Method for stabilization of stillage from alcohol production wherein the stillage after production optionally after an initial cooling, is treated at a temperature and time selected from:
72-90°C for 1 minute or less;
120-145°C for 15 seconds to 5 minutes; or
heated in a closed container with a profile
where the temperature reaches 121-130°C for up to 20 minutes
before being cooled down to room temperature.
